Europäisches Patentamt

European Patent Office

Office européen des brevets

(19)

(11) Numéro de publication: **0 181 027**
**A2**

(12)

# DEMANDE DE BREVET EUROPEEN

(21) Numéro de dépôt: 85201728.4

(22) Date de dépôt: 23.10.85

(51) Int. Cl.⁴: **A 01 K 89/02**

(30) Priorité: 09.11.84 BE 2060541
29.03.85 BE 2060656

(43) Date de publication de la demande:
14.05.86 Bulletin 86/20

(84) Etats contractants désignés:
DE FR GB IT NL

(71) Demandeur: FABRIQUE NATIONALE HERSTAL en
abrégé FN Société Anonyme

B-4400 Herstal(BE)

(72) Inventeur: Dispas, Jean-Paul
rue de la Tolle 22
B-4430 Alleur(BE)

(74) Mandataire: Donné, Eddy
M.F.J.Bockstael Arenbergstraat 13
B-2000 Anvers(BE)

(54) Perfectionnements aux moulinets à frein pour cannes à pêche.

(57) L'action du levier (17) sur les disques (9–10) est à l'encontre de l'action dudit ressort (12) sur lesdits disques.

Fig.1

EP 0 181 027 A2

1

0181027

"Perfectionnements aux moulinets à frein pour cannes à pêche".

L'invention concerne des perfectionnements aux moulinets à frein pour cannes à pêche, plus spécialement des moulinets du type dont le tambour est monté sur un axe pouvant être entraîné au moyen d'une manivelle, ledit axe étant pourvu d'un mécanisme de freinage dont l'impact sur cet axe est réglable.

Ce réglage des moulinets à frein connus peut être influencé de deux manières.

Le premier réglage est substantiellement constitué par un bouton monté sur l'extrémité dudit axe dirigée vers le pêcheur, et monté dans le boîtier du moulinet à frein, à la fois de manière rotative et axialement déplaçable afin de pouvoir effectuer, par l'intermédiare d'un ressort de compression, une poussée sur ledit mécanisme à frein et de régler ainsi d'une manière progressive le freinage dudit tambour.

Le deuxième réglage dudit tambour des moulinets à frein actuellement sur le marché est substantiellement constitué par un levier situé à proximité de la canne même, de manière à pouvoir être actionné par le pêcheur sans pour cela devoir lâcher la canne. Ledit levier agit, via tringle et levier, sur ledit mécanisme de freinage de manière directe de façon à permettre au pêcheur d'intervenir instantanément sur le déroulement dudit tambour indépendamment dudit premier réglage de frein.

Toutefois, ce deuxième réglage, quoique souhaité par les pêcheurs, s'est révélé être trop brusque, d'où, e.a., risque de rupture de la ligne de pêche.

Les perfectionnements selon l'invention concernent plus spécialement ledit deuxième réglage en visant d'éviter un réglage brusque et d'assurer, au contraire, un réglage tout à fait progressif.

A cette fin, ces perfectionnements, appliqués à des moulinets à freins pour cannes à pêche, du type dont le tambour est monté sur un axe pouvant être entraîné au moyen d'une manivelle et dans lesquels l'axe est pourvu d'un premier mécanisme de freinage constitué par des paires de disques engagées entre une partie fixe du boîtier et un ressort travaillant en compression et sur lequel agit un élément de réglage de pression, et d'un deuxième mécanisme de freinage constitué par un bras de levier relié à un levier pouvant influencer les susdits disques, sont caractérisés en ce que l'action dudit levier sur lesdits disques est à l'encontre de l'action dudit ressort sur lesdits disques.

Dans le but de faire ressortir plus clairement les caractéristiques de l'invention, deux exécutions sont décrites ci-après, à titre d'exemple, sans caractère limitatif, avec référence aux dessins annexés dans lesquels

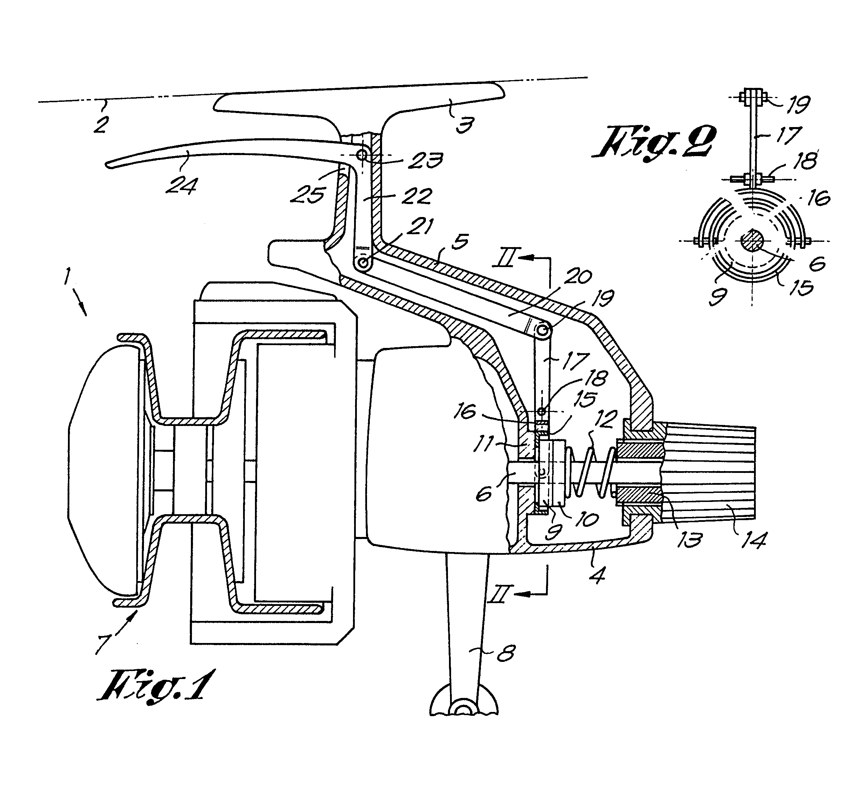

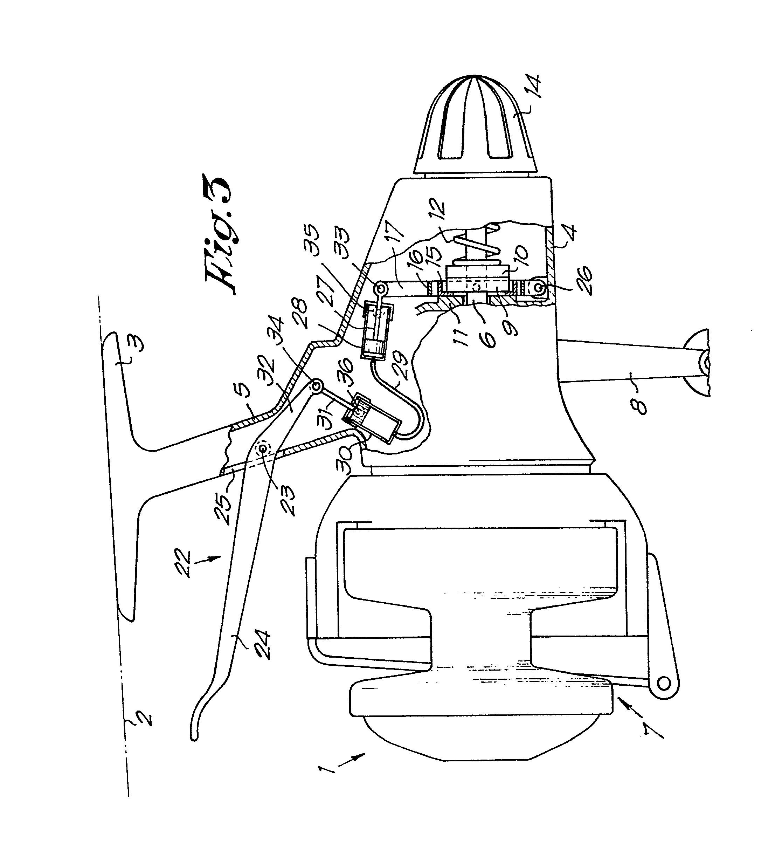

la figure 1 représente, de manière schématique et en coupe longitudinale, un moulinet à frein sur lequel les perfectionnements selon l'invention sont appliqués, la figure 2 représentant une coupe selon la ligne II-II dans la figure 1; la figure 3 représente, également de manière schématique et en coupe longitudinale, une variante de la figure 1.

Dans l'exemple des figures 1 et 2, le moulinet 1 est destiné à être fixé sur une canne à pêche par l'intermédiaire d'un soutien 3. Ce dernier est relié au boîtier 4 du moulinet par une partie coudée creuse 5.

Le boîtier 4 porte l'axe 6 sur lequel est fixé la bobine 7.

Les éléments rotatifs du moulinet à frein peuvent être entraînés en rotation au moyen d'une manivelle 8.

Le susdit premier réglage du frein est schématisé dans cette exécution par deux disques à frein, respectivement 9-10, engagés d'une telle manière sur l'axe 6 que l'un des disques, par exemple le disque 9, est monté de manière non rotative mais axialement mobile, tandis que le disque 10 est monté, à la fois, rotativement et axialement mobile.

Le disque 9 est adjacent à une partie fixe 11 du boîtier et le disque 10 est assujetti à la poussée du ressort 12 dont l'autre extrémité est influencée par la partie intérieure 13 du bouton 14.

Cette partie 13 peut être déplacée axialement d'une manière quelconque par rotation du bouton 14, afin d'exercer un effort variable sur le ressort 12.

Selon les présents perfectionnements est interposé, entre ladite partie fixe 11 et le disque 9, un élément de poussée, en l'occurrence un anneau 15, sur lequel agit une fourche 16 fixée à l'extrémité libre d'un levier 17. Ce dernier peut basculer autour d'un axe 18 et est relié à son extrémité libre, au moyen d'un pivot 19, à une tringle 20 dont l'autre extrémité est reliée, au moyen d'un pivot 21, à un levier coudé 22 articulé lui-même sur un axe 23.

Le bras 24 dudit levier 22 dépasse de la partie creuse 5 du boîtier 4 au travers d'une ouverture 25.

Il ressort des dessins qu'en sollicitant ledit bras 24,

4

0181027

l'anneau 15 est déplacé vers les disques 9-10, provoquant ainsi un freinage de l'axe 6, respectivement la bobine 7.

Selon l'invention, ce freinage, qui se produit par la friction entre les disques 9-10, augmente progressivement par le fait que l'action de l'anneau 15 sur les disques 9-10 est à l'encontre de l'action du ressort 12 sur ces disques 9-10.

On obtient ainsi que le susdit deuxième réglage du freinage, par le fait de sa progressivité, évite des ruptures de la ligne par le freinage.

La variante selon la figure 3 concerne la commande du disque 9 par le levier 17 lequel est articulé autour d'un axe 26 et est sollicité par la partie mobile 27 d'un vérin hydraulique 28 relié, au moyen d'un conduit 29, à un deuxième vérin hydraulique 30 dont la partie mobile 31 peut être sollicitée par l'extrémité libre 32 du bras 33 du levier 22.

Les parties mobiles 27, respectivement 31, sont reliées aux leviers, respectivement 17 et 22, par des pivots, respectivement 33-34, tandis que les vérins hydrauliques 28 et 30 eux-mêmes sont reliés au boîtier 4 du moulinet par des pivots, respectivement 35 et 36.

L'invention n'est nullement limitée aux exécutions décrites précédemment et illustrées dans les dessins, mais il est possible de réaliser les perfectionnements sous toutes formes et dimensions sans sortir du cadre de l'invention.

0181027

Revendications.

1.- Perfectionnements aux moulinets à frein pour cannes à pêche, du type dont la bobine (7) est monté sur un axe (6), ledit axe (6) étant pourvu d'un premier mécanisme de freinage constitué par des paires de disques (9-10) engagées entre une partie fixe (11) du boîtier (4) et un ressort (12) travaillant en compression et sur lequel agit un élément (13-14) de réglage de pression et un deuxième mécanisme de freinage constitué par un bras de levier (24) relié à un levier (17) pouvant influencer les susdits disques (9-10), caractérisés en ce que l'action dudit levier (17) sur les disques (9-10) est à l'encontre de l'action dudit ressort (12) sur lesdits disques.

2.- Perfectionnements selon la revendication 1, caractérisés en ce que l'extrémité libre du levier (17) est disposée entre ladite partie fixe (11) du boîtier (4) et le disque adjacent (9).

3.- Perfectionnements selon la revendication 2, caractérisés en ce qu'entre ladite partie fixe (11) du boîtier (4) et le disque adjacent (9) est disposé un anneau (15) fixé sur le levier (17).

4.- Perfectionnements selon la revendication 3, caractérisés en ce que l'anneau (15) est porté par une fourche (16) fixée sur le levier (17).

5.- Perfectionnements selon l'une des revendications précédentes, caractérisés en ce que le levier (17) est articulé autour d'un axe de basculement (18).

6.- Perfectionnements selon l'une des revendications 1 à 4, caractérisés en ce que le levier (17) est articulé autour d'un axe de basculement (26).

7.- Perfectionnements selon l'une des revendications 1 à 5, caractérisés en ce que l'extrémité du levier (17), opposée aux disques de freinage, est articulée à une tringle (20) elle-même articulée à un levier coudé (22) dont fait partie le susdit bras (24).

8.- Perfectionnements selon l'une des revendications 1 à 4, 6 ou 8, caractérisés en ce que l'extrémité du levier (17), opposée aux disques de freinage, est articulée à un système de commande hydraulique.

9.- Perfectionnements selon la revendication 8 caractérisés en ce que le système de commande hydraulique est constitué par deux vérins reliés au boîtier (4) du moulinet, les parties mobiles (27-31) de ces vérins étant reliées, respectivement, auxdits leviers (18-22).

10.- Perfectionnements selon la revendication 9, caractérisés en ce que les extrémités libres des parties mobiles (27-31) sont articulées en (33-34) aux extrémités libres, respectivement, des leviers (17-22), tandis que les vérins (28-30) eux-mêmes sont articulés en (35-36) sur le boîtier (4) du moulinet.

Fig.2

Fig.1

1/2

0181027

Fig.3